Europäisches Patentamt

European Patent Office

Office européen des brevets

(19)

(11) Veröffentlichungsnummer: **0 265 826 B1**

(12) EUROPÄISCHE PATENTSCHRIFT

(45) Veröffentlichungstag der Patentschrift: **04.03.92**

(51) Int. Cl.⁵: **B60R 25/02**

(21) Anmeldenummer: **87115405.0**

(22) Anmeldetag: **21.10.87**

(54) Lenksperre eines Kraftfahrzeugs.

(30) Priorität: **25.10.86 DE 3636449**

(43) Veröffentlichungstag der Anmeldung:
**04.05.88 Patentblatt 88/18**

(45) Bekanntmachung des Hinweises auf die
Patenterteilung:
**04.03.92 Patentblatt 92/10**

(84) Benannte Vertragsstaaten:
**DE ES FR GB IT NL SE**

(56) Entgegenhaltungen:
**WO-A-86/02051**
**FR-A- 532 414**
**FR-A- 2 161 392**
**FR-A- 2 546 992**

(73) Patentinhaber: **VALEO NEIMAN**
**12bis, rue Maurice Berteaux**
**F-78290 CROISSY-SUR-SEINE(FR)**

(72) Erfinder: **Wolffgang, Günter**
**Flexstrasse 12**
**W-5600 Wuppertal 22(DE)**

(74) Vertreter: **Cohausz & Florack Patentanwälte**
**Postfach 14 01 61 Schumannstrasse 97**
**W-4000 Düsseldorf 1(DE)**

**Beschreibung**

Die Erfindung betrifft eine Lenksperre eines Kraftfahrzeuges mit einem auf einer Lenkspindel befindlichen koaxialen ersten Kupplungsteil, das an einem axial auf der Lenkspindel beweglichen, drehfesten zweiten Kupplungsteil angreift, wobei zum Sperren der Lenkspindel 3 das zweite Kupplungsteil 8 insbesondere über Zwischenteile 10 axial beweglich ist.

Es ist bekannt, eine Lenkspindel durch einen etwa radial angeordneten Sperriegel zu blockieren, der in eine auf der Lenkspindel festen Sperrhülse eingreift. Hierbei ist die Sperrhülse durch eine Überlastkupplung auf der Lenkspindel gehalten, so daß bei Überschreiten eines Grenzdrehmomentes die Lenkspindel verdrehbar ist und damit ein Bruch des Sperriegels oder anderer Teile verhindert wird.

Ferner ist aus der FR-A-2546992, die die Merkmale des Oberbegriffs des Anspruchs 1 offenbart, bekannt, durch ein kaftschlüssiges Klemmgesperre die Lenkspindel zu blockieren. Wiederum ist ein Sperriegel erforderlich. Auch sind die Klemmkräfte nicht genügend genau bestimmbar.

Aufgabe der Erfindung ist es, eine Lenksperre zu schaffen, die bei einfacher Konstruktion und Montage ohne einen Sperriegel auskommt. Alternativ oder zusätzlich ist es Aufgabe der Erfindung eine Lenksperre zu schaffen, die bei hoher Aufbruchsicherheit ohne Schloßteile oder aber nur mit wenigen Schloßteilen auskommt.

Diese Aufgaben werden erfindungsgemäß dadurch gelöst, daß zur Bildung einer Überlastkupplung beide Kupplungsteile 7, 8 Bestandteile eines Formgehemmes sind.

Eine solche Lenksperre ist konstruktiv einfach, von hoher Sicherheit und weist geringe Außenabmessungen auf. Ein Sperriegel ist nicht erforderlich, da die Kupplungsteile selber die Sperrung bewirken und hierbei sehr hohe Kräfte aufnehmbar sind.

Die Größe der aufnehmbaren Kräfte ist dann besonders exakt bestimmbar, wenn zur Bildung des Formgehemmes die Vorsprünge und Ausnehmungen der Kupplungsteile zur Achsrichtung schräge Flächen aufweisen. Auch kann hierzu das erste und/oder zweite Kupplungsteil gegen den Druck mindestens einer Feder axial beweglich sein. Ferner wird hierzu vorteilhafterweise vorgeschlagen, daß die Feder von mindestens einer koaxialen Tellerfeder gebildet ist. Eine besonders sichere Arbeitsweise bei optimaler Kraftübertragung wird dann erreicht, wenn die Außenseite des ersten Kupplungsteils konisch ist und von einer konischen Ausnehmung des zweiten Kupplungsteils übergriffen wird. Von Vorteil ist auch, wenn der motorische Antrieb des zweiten Kupplungsteils ein Elektromotor ist, der über eine Antriebsspindel das zweite Kupplungsteil bewegt. Hierbei kann die Sperre besonders einfach elektrisch, insbesondere elektronisch gesteuert werden.

Eine sichere Arbeitsweise bei einfacher Konstruktion wird dann erreicht, wenn ein Ende der Antriebsspindel über einen Hebel oder ein Gestänge mit dem zweiten Kupplungsteil verbunden ist.

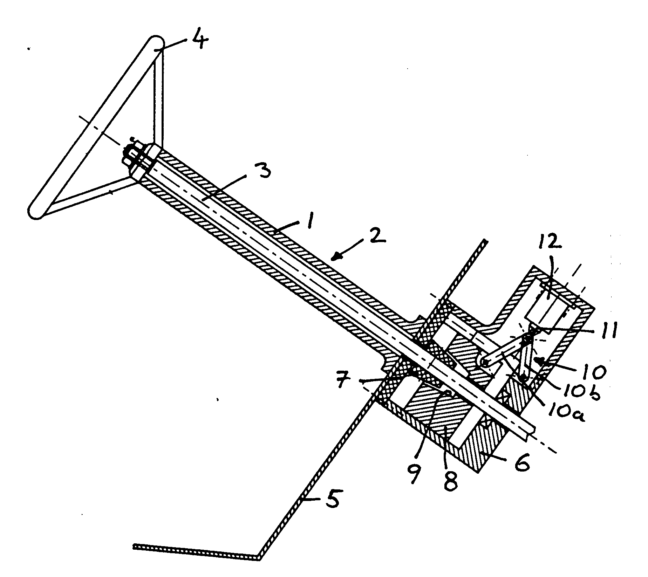

Ein Ausführungsbeispiel der Erfindung ist in der Zeichnung in einem axialen Schnitt dargestellt und wird im folgenden näher beschrieben.

In dem äußeren Rohr 1 einer Lenksäule 2 ist koaxial eine Lenkspindel 3 geführt, an derem oberen Ende ein Lenkrad 4 befestigt ist. Die Lenkspindel 3 ist an ihrem unteren nicht dargestellten Ende mit Teilen der Lenkung eines Kraftfahrzeuges verbunden.

Die Lenkspindel 3 durchdringt das schräggestellte Bodenblech 5 und auf der Innenseite des Bodenblechs 5 ist ein Gehäuse 6 angeschraubt, das die Lenksperre enthält. Innhalb des Gehäuses 6 ist auf der Lenkspindel 3 ein erstes Kupplungsteil 7 drehfest angeordnet, so daß dieses Kupplungsteil 7 sich mit der Lenkspindel 3 dreht. Das Kupplungsteil 7 ist im Ausführungsbeispiel hülsen- oder rohrabschnittförmig, wobei die Außenseite konisch ist und sich zu einem zweiten Kupplungsteil 8 hin verjüngt, das auf der dem Lenkrad 4 abgewandten Seite des Kupplungsteils 7 im Gehäuse 6 in Achsrichtung der Lenkspindel 3 verschieblich geführt ist. Das Kupplungsteil 8 weist eine innere Ausnehmung 9 auf, die etwa den Außenabmessungen des Kupplungsteils 8 entspricht und damit auch konisch ist. Die Außenseite des Kupplungsteils 7 als auch die Innenwand der Ausnehmung 9 weisen einander entsprechende Vorsprünge und Rücksprünge, insbesondere einander entsprechende Verzahnungen auf, so daß nachdem das Kupplungsteil 8 das Kupplungsteil 7 überfahren hat, die Lenkspindel nicht mehr verdreht werden kann.

Das Kupplungsteil 8 wird durch ein Gestänge 10 verschoben, das aus zwei Gelenkstangen 10a, 10b besteht, die beide an der Spindel 11 einer Antriebsvorrichtung in Form eines Elektromotors 12 befestigt sind. Die Gelenkstange 10a ist darüber hinaus mit dem anderen Ende am Kupplungsteil 8 und die Gelenkstange 10b mit dem anderen Ende am Gehäuse 6 angelenkt. Wird die Antriebsspindel 11 durch den Elektromotor 12 etwa radial zur Lenkspindel 3 ausgefahren, so wird das Kupplungsteil 8 zum Kupplungsteil 7 hin bewegt. Hierbei wird der Elektromotor 12 etwas verschwenkt um eine nicht dargestellte Anlenkung des Elektromotors am Gehäuse 6.

Das Ankuppeln des Teils 8 am Teil 7 kann durch die unterschiedlichsten Kupplungsarten geschehen. Hierbei müssen die Teile 7, 8 auch nicht unbedingt konisch geformt sein, sondern es sind auch andere an sich bekannte Kupplungsformen, insbesondere scheibenförmige Kupplungsteile möglich.

Bei Verwendung einer Klauen- oder Zahnkupplung können die Vorsprünge und Ausnehmungen, d.h. die Klauen oder Zähne und Ausnehmungen zur Achsrichtung schräge Flächen aufweisen, um ein Formgehemme einer Überlastkupplung zu bilden. Hierbei erzeugen die Schrägflächen ab einem bestimmten Drehmoment der Lenkspindel ein Abdrücken des Kupplungsteils 7 vom Kupplungsteil 8, so daß die Kupplung kurzzeitig außer Eingriff ist. Diese Bewegung des Kupplungsteils 8 geschieht hierbei gegen den Druck einer Feder, insbesondere einer oder mehrerer nicht dargestellter Tellerfedern. Alternativ kann aber auch das Kupplungsteil 7 sich entgegen den Druck von Federn vom Kupplungsteil 8 wegbewegen.

Das Anordnen eines Elektromotors 12 führt zu besonders einfacher, sicherer und bequemer elektrischer, insbesondere elektronischer Steuerung der Lenksperre. Alternativ oder zusätzlich kann das Kupplungsteil 8 aber auch durch ein Lenkschloß, insbesondere ein Zylinderschloß von Hand betätigt werden. Ferner können statt des Gestänges 10 auch andere Arten von Übertragungsteilen als auch Getriebeteilen eingesetzt werden.

In einer weiteren Ausführungsform wird vorgeschlagen, daß die Deblockierung der Lenksäule über kodierte, beispielsweise elektrische Signale ausgelöst wird, die durch den Zündschlüssel eingebracht und nach dem Einstecken des Zündschlüssels in das Lenkradschloß über den Decodierer zur Steuerung der Deblockierung geleitet werden. Auch wird in einer weiteren Ausführung vorgeschlagen, daß durch einen an mindestens einem der Räder bzw. mit dem Rad bewegten Teilen angebrachten Sensor die Drehbewegung des oder der Räder festgestellt wird und daß der Sensor bei Radstillstand ein Signal als eine Bedingung für das mechanische Blokkieren der Lenksäule aussendet.

**Patentansprüche**

1. Lenksperre eines Kraftfahrzeuges mit einem auf einer Lenkspindel (3) befindlichen koaxialen ersten Kupplungsteil (7), das an einem axial auf der Lenkspindel beweglichen, drehfesten zweiten Kupplungsteil (8) angreift, wobei zum Sperren der Lenkspindel (3) das zweite Kupplungsteil (8) insbesondere über Zwischenteile (10) axial beweglich ist, **dadurch gekennzeichnet, daß** zur Bildung einer Überlastkupplung beide Kupplungsteile (7,8) Bestandteile eines Formgehemmes sind.

2. Lenksperre nach Anspruch 1, **dadurch gekennzeichnet, daß** zur Bildung des Formgehemmes die Vorsprünge und Ausnehmungen der Kupplungsteile (7,8) zur Achsrichtung schräge Flächen aufweisen.

3. Lenksperre nach Anspruch 1 oder 2, **dadurch gekennzeichnet, daß** das erste und/oder zweite Kupplungsteil (7,8) gegen den Druck mindestens einer Feder axial beweglich ist.

4. Lenksperre nach Anspruch 3, **dadurch gekennzeichnet, daß** die Feder von mindestens einer koaxialen Tellerfeder gebildet ist.

5. Lenksperre nach einem der vorstehenden Ansprüche, **dadurch gekennzeichnet, daß** die Außenseite des ersten Kupplungsteils (7) konisch ist und von einer konischen Ausnehmung (9) des zweiten Kupplungsteils (8) übergriffen wird.

6. Lenksperre nach einem der vorstehenden Ansprüche, **dadurch gekennzeichnet, daß** ein manueller Antrieb des zweiten Kupplungsteils über ein Schloß erfolgt, das über eine Antriebsspindel (11) das zweite Kupplungsteil (8) bewegt.

7. Lenksperre nach einem der Ansprüche 1 bis 5, **dadurch gekennzeichnet, daß** ein motorischer Antrieb (12) des zweiten Kupplungsteils (8) ein Elektromotor ist, der über eine Antriebsspindel (11) das zweite Kupplungsteil (8) bewegt.

8. Lenksperre nach Anspruch 6 oder 7, **dadurch gekennzeichnet, daß** ein Ende der Antriebsspindel (11) über einen Hebel oder ein Gestänge (10) mit dem zweiten Kupplungsteil (8) verbunden ist.

**Claims**

1. A motor vehicle steering lock comprising a first coupling element (7), located coaxially on a steering shaft (3), which engages with a second coupling element (8) fixed in rotation but movable axially on the steering shaft, wherein in order to lock the steering shaft (3) the second coupling element (8) is, in particular, axially movable by means of intermediate elements (10), characterized in that in order to form an overload coupling both coupling elements (7, 8) are components of a shape-dependent coupling.

2. A steering lock according to claim 1, characterized in that in order to form the shape-dependent coupling, the projections and recesses of the coupling elements (7, 8) comprise surfaces inclined relative to the direction of the shaft.

3. A steering lock according to claim 1 or claim 2, characterized in that the first and/or second coupling element (7,8) is axially movable against the pressure of at least one spring.

4. A steering lock according to claim 3, characterized in that the spring consists of at least one coaxial disk spring.

5. A steering lock according to any one of the preceding claims, characterized in that the outside of the first coupling element (7) is conical and fits into a conical recess (9) in the second coupling element (8).

6. A steering lock according to any one of the preceding claims, characterized in that a manual drive of the second coupling element is obtained by means of a lock which moves the second coupling element (8) by means of a drive shaft (11).

7. A steering lock according to any one of claims 1 to 5, characterized in that a motorised drive (12) for the second coupling element (8) consists of an electric motor which moves the second coupling element (8) by means of a drive shaft (11).

8. A steering lock according to claim 6 or claim 7, characterized in that one end of the drive shaft (11) is connected to the second coupling element (8) by means of a lever or a rod linkage (10).

**Revendications**

1. Blocage de direction pour véhicule automobile avec un premier demi-accouplement (7) coaxial situé sur un arbre de direction (3), qui agit sur un deuxième demi-accouplement (8) résistant à la torsion se déplaçant sur l'arbre de direction (3), le deuxième demi-accouplement (8) étant mobile axialement, tout particulièrement grâce à des pièces intermédiaires (10), en vue du blocage de l'arbre de direction (3), caractérisé en ce que, pour constituer un accouplement de surcharge, les deux demi-accouplements (7,8) font partie intégrante d'un système de blocage moulé.

2. Blocage de direction selon la revendication 1, caractérisé en ce que, pour constituer le système de blocage moulé, les parties saillantes et les évidements des demi-accouplements (7,8) présentent des surfaces inclinées par rapport à la direction de l'axe.

3. Blocage de direction selon l'une des revendications 1 ou 2, caractérisé en ce que le premier et/ou le deuxième accouplement (7,8) est mobile axialement contre la pression d'au moins un ressort.

4. Blocage de direction selon la revendication 3, caractérisé en ce que le ressort est constitué d'au moins un ressort Belleville coaxial.

5. Blocage de direction selon l'une des revendications précédentes, caractérisé en ce que la face extérieure du premier demi-accouplement (7) est conique et s'imbrique dans un évidement conique (9) prévu sur le deuxième demi-accouplement (8).

6. Blocage de direction selon l'une des revendications précédentes, caractérisé en ce qu'un entraînement manuel du deuxième demi-accouplement (8) est assuré par une serrure qui imprime un mouvement au deuxième demi-accouplement (8) au moyen d'un arbre d'entraînement (11).

7. Blocage de direction selon l'une des revendications 1 à 5, caractérisé en ce qu'un entraînement par moteur (12) du deuxième demi-accouplement (8) est constitué d'un moteur électrique qui imprime un mouvement au deuxième demi-accouplement (8) au moyen d'un arbre d'entraînement (11).

8. Blocage de direction selon les revendications 6 ou 7, caractérisé en ce qu'une extrémité de l'arbre d'entraînement (11) est reliée au deuxième demi-accouplement (8) par un levier ou une timonerie (10).